# EUROPÄISCHE PATENTANMELDUNG

(11) **EP 2 611 086 A1**
(43) Veröffentlichungstag der Anmeldung: **03.07.2013**
(21) Anmeldenummer: 11306627.8
(22) Anmeldetag: 08.12.2011
(51) Int. Cl.: H04L 12/729

(54) **Verfahren zum Betreiben eines digitalen Netzwerks**

(71) Anmelder: Nexans, 75008 Paris (FR)
(72) Erfinder: Theissen, Hubert, 41849 Wassenberg (DE)
(74) Vertreter: Döring, Roger

(57) **Zusammenfassung**

Es wird ein Verfahren zum Betreiben eines digitalen Netzwerks angegeben, das mindestens einen Verteiler (3) aufweist, an welchen eine beliebige Anzahl elektronischer Geräte und zumindest eine Spannungsquelle angeschlossen sind. In dem Verteiler (3) wird zusätzlich eine ständig mit der Spannungsquelle verbundene Bereitschaftsschaltung (13) mit einem Spannungsschalter (12) angeschlossen, durch welchen signifikante Teile der Spannungsversorgung (P2) des Verteilers (3) zu dessen Aktivierung einerseits und Deaktivierung andererseits aus der Spannungsquelle ein- und ausschaltbar sind. Die im aktiven Zustand befindliche Bereitschaftsschaltung (13) wird durch ein internes Signal oder durch ein externes Signal manuell oder zu einem vorgebbaren Zeitpunkt deaktiviert.

## Beschreibung

Die Erfindung bezieht sich auf ein Verfahren zum Betreiben eines digitalen Netzwerks, das mindestens einen Verteiler aufweist, an welchen eine beliebige Anzahl elektronischer Geräte und zumindest eine Spannungsquelle angeschlossen sind (DE 100 30 748 A1).

Ein bei einem solchen Verfahren eingesetzter Verteiler wird in der Fachwelt auch als "Netzwerk Switch" oder kurz als "Switch" bezeichnet. Diese Bezeichnung wird im Folgenden verwendet. Ein Switch ist ein Koppelelement, das die in einem Netzwerk angeschlossenen Geräte miteinander verbindet und Datenströme verarbeitet bzw. an Adressaten des Netzwerks weiterleitet. Ein Switch kann auch für die Spannungsversorgung der Geräte des Netzwerks sorgen. Ein entsprechendes Netzwerk, auch als lokales Netzwerk bezeichnet, ist beispielsweise das Ethernet.

An einen Switch sind in einem Netzwerk beispielsweise Computer, Telefone und Drucker angeschlossen. Ein derartiges Netzwerk weist mindestens einen Switch auf. Es sind in der Regel aber mehrere Switche vorhanden. Da es auf deren Funktionen untereinander im Einzelnen nicht ankommt, sondern nur auf den Switch selber, wird im folgenden nur ein Switch berücksichtigt. In bekannten Netzwerken ist der Switch dauernd in Betriebsbereitschaft. Das bedeutet, daß alle elektrischen Funktionen des Switches ständig mit Spannung versorgt sind, auch wenn keines der angeschlossenen Geräte in Benutzung ist. Der Stromverbrauch eines solchen Netzwerks mit einer Vielzahl von Switches ist dementsprechend hoch.

Die eingangs erwähnte DE 100 30 748 A1 beschreibt eine Schaltungsanordnung für ein digitales Netzwerk, das in seinem Aufbau mehrerer als Sternverteiler bezeichnete Switche aufweist. Die Schrift erwähnt, daß ein Switch ein aktives Bauteil mit mehreren Ausgängen ist. Auch bei diesem Netzwerk sind alle Funktionen der Switche ständig mit Spannung versorgt.

Der Erfindung liegt die Aufgabe zugrunde, das eingangs geschilderte Verfahren so weiterzubilden, daß der Stromverbrauch im Netzwerk vermindert werden kann.

Diese Aufgabe wird gemäß der Erfindung dadurch gelöst,
- daß in dem Switch zusätzlich eine ständig mit der Spannungsquelle verbundene Bereitschaftsschaltung mit einem Spannungsschalter angeschlossen wird, durch welchen signifikante Teile der Spannungsversorgung des Switches zu dessen Aktivierung einerseits und Deaktivierung andererseits aus der Spannungsquelle ein- und ausschaltbar sind, und
- daß die im aktiven Zustand befindliche Bereitschaftsschaltung durch ein internes Signal oder durch ein externes Signal manuell oder zu einem vorgebbaren Zeitpunkt deaktiviert wird.

Durch die Bereitschaftsschaltung, die in der Fachwelt auch als "Standby-Schaltung" bezeichnet wird, kann die Spannungsversorgung für signifikante Teile des Switches gezielt, zu bestimmten Zeiten abgeschaltet werden. Dieser Zustand wird im Folgenden als Standby-Betrieb bezeichnet. Der Spannungsschalter ist dabei geöffnet. Zeiten, in denen der Standby-Betrieb aktiviert werden kann, sind beispielsweise die Nachtstunden, wenn beispielsweise in Bürogebäuden nicht mehr gearbeitet wird. Es kann mit diesem Verfahren der Energieverbrauch gezielt, z. B. zu programmierten Zeiten, gesenkt werden.

In bevorzugter Ausführungsform ist der Switch mit einem Zeitglied ausgerüstet, durch welches der aktivierte Standby-Betrieb nach einer vorgegebenen Zeitdauer wieder deaktiviert werden kann. Gleichzeitig mit der Aktivierung des Standby-Betriebs kann dieses Zeitglied beispielsweise durch einen zum Switch gehörenden zentralen Prozessor (CPU) auf eine bestimmte Zeitdauer eingestellt werden. Nach Ablauf der eingestellten Zeitdauer wird der Standby-Betrieb deaktiviert, d.h. der Spannungsschalter schaltet die Spannungsversorgung wieder ein. Bei aktiviertem Standby-Betrieb sind signifikante Teile des Switches und gegebenenfalls alle an ihn angeschlossenen und von ihm mit Spannung versorgten Geräte von der Spannungsquelle getrennt, also abgeschaltet. Nur die Standby-Schaltung selber und beispielsweise ein durch den Switch spannungsversorgter Geräteanschluß des Switches bleiben mit Spannung versorgt.

Die Deaktivierung des Standby-Betriebs kann auch über ein externes Signal erfolgen, das einem Eingang des Switches zugeführt wird. An diesen Eingang wird vorzugsweise ein elektrischer Taster oder ein Relaiskontakt angeschlossen. Auch durch eine Änderung des Link-Zustandes eines spannungsversorgten Geräteanschlusses ist eine Deaktivierung des Standby-Betriebs möglich.

Das Verfahren nach der Erfindung wird anhand der Zeichnungen als Ausführungsbeispiel erläutert.

Es zeigen:
Fig. 1 schematisch ein digitales Netz.
Fig. 2 ein Blockschaltbild eines Switches.

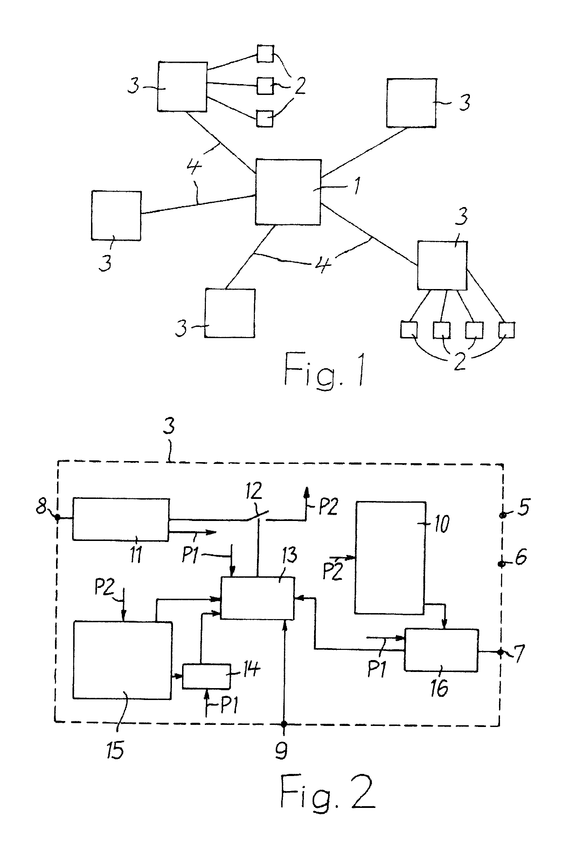

Das in Fig. 1 dargestellte digitale Netz ist als Sternnetz mit einem zentralen Switch 1 ausgeführt, in dem eine Anzahl von Teilnehmern 2 bzw. Geräten angeschlossen ist. Die Teilnehmer 2 sind jeweils mit einem Switch 3 verbunden. Das Netz weist mehrere Switche 3 auf, die an den zentralen Switch 1 angeschlossen sind. Teilnehmer 2 bzw. Geräte sind an jeden Switch 3 angeschlossen. Sie sind in Fig. 1 der Einfachheit halber nur für zwei Switche 3 eingezeichnet. Jeder Switch 3 kann beispielsweise über eine Kupfer- oder Glasfaserverbindung 4 an den zentralen Switch 1 angeschlossen sein, der die Daten der Switche 3 entsprechend der Netzwerkfunktion verteilt. Das in Fig. 1 gezeigte Sternnetz ist nur ein Beispiel für eine mögliche Netzwerktopologie.

Der in Fig. 2 als Blockschaltbild dargestellte und im folgenden beschriebene Switch 3 hat keine zentrale Verteilfunktion, wie beispielsweise der Switch 1, sondern es sind primär Geräte bzw. Teilnehmer 2 an denselben angeschlossen. Der Switch 3 ist durch eine gestrichelte Linie begrenzt, auf welcher exemplarisch mehrere Netzwerkanschlüsse 5, 6 und 7, ein Spannungseingang 8 und ein Eingang 9 angeordnet sind. Der Switch 3 weist zu seinem Betrieb einen Daten- und Stromverteiler 10 auf, der an einen Spannungswandler 11 angeschlossen ist und von demselben mit einer Spannung P2 versorgt wird. Der Spannungswandler 11 ist über den Spannungseingang 8 an eine externe Spannungsquelle angeschlossen. Er liefert neben der Spannung P2 eine zweite Spannung P1. In praktischer Ausführung können die Spannungen P1 und P2 jeweils auch aus verschiedenen Einzelspannungen bestehen, abhängig von den jeweils verwendeten elektrischen Bauteilen des Switches 3.

Im Switch 3 ist außerdem eine mit einem Spannungsschalter 12 ausgerüstete Standby-Schaltung 13 angeordnet, die an die Spannung P1 angeschlossen ist. Der Spannungsschalter 12 liegt im Strompfad der Spannung P2.

Im dargestellten Ausführungsbeispiel gehören zum Switch 3 auch ein an die Spannung P1 angeschlossenes Zeitglied 14 und ein an die Spannung P2 angeschlossener zentraler Prozessor 15-im folgenden "CPU 15" genannt.

An den Switch 3 bzw. dessen Daten- und Stromverteiler 10 ist über Netzwerkanschlüsse eine beliebige Anzahl von Geräten angeschlossen. Als Beispiele für solche Netzwerkanschlüsse sind in Fig. 2 die drei Netzwerkanschlüsse bzw. Ports 5, 6 und 7 eingezeichnet.

Im laufenden Betrieb hat die Standby-Schaltung 13 den Standby-Betrieb deaktiviert. Der Spannungsschalter 12 ist dann geschlossen, so daß alle an die Spannung P2 angeschlossenen Funktionen bzw. Geräte des Switches 3 mit Spannung versorgt werden.

Wenn signifikante Teile des Switches 3 bzw. seiner angeschlossenen Geräte abgeschaltet werden sollen, wird durch die Standby-Schaltung 13 der Standby-Betrieb durch Öffnen des Spannungsschalters 12 aktiviert. Die Spannung P2 ist dann unterbrochen. Dieser Zustand bleibt solange erhalten, bis der Spannungsschalter 12 durch ein internes Signal oder durch ein externes Signal wieder geschlossen wird.

Ein internes Signal kann beispielsweise durch das Zeitglied 14, das auch bei geöffnetem Spannungsschalter 12 ständig weiter an die Spannung P1 angeschlossen ist, erzeugt und der Standby-Schaltung 13 zugeführt werden, durch welche der Spannungsschalter 12 daraufhin geschlossen wird. Alle an die Spannung P2 angeschlossenen Funktionen und Geräte werden dann wieder mit Spannung versorgt.

Das Zeitglied 14 kann beispielsweise manuell oder mit Vorteil beim Aktivieren der Standby-Schaltung 13 durch die CPU 15 gleichzeitig auf eine vorgebbare bzw. programmierbare Zeitdauer eingestellt werden, nach deren Ablauf dasselbe ein internes Signal an die Standby-Schaltung 13 liefert, die daraufhin den Standby-Betrieb deaktiviert. Eine solche Zeitdauer kann aber auch auf andere Art und Weise am Zeitglied 14 eingestellt werden.

Die Deaktivierung der Standby-Schaltung 13 kann auch durch ein externes Signal erfolgen, das dem Switch 3 beispielsweise über den Eingang 9 zugeführt wird. Des Weiteren ist es möglich, am spannungsversorgten Netzwerkanschluss 7 eine Link-Unterbrechung durchzuführen.

Das Verfahren nach der Erfindung arbeitet beispielsweise wie folgt:
Im laufenden Betrieb sind alle Funktionen des Switches 3 an den Spannungswandler 11 und damit an dessen Spannungen P1 und P2 angeschlossen. Alle mit dem Switch 3 verbundenen Funktionen und Geräte werden dann mit Spannung versorgt.

Wenn der Switch 3 in den Standby-Betrieb geschaltet werden soll, wird durch ein Signal der CPU 15 an die Standby-Schaltung 13 der Spannungsschalter 12 geöffnet. Die Spannung P2 ist dann unterbrochen und alle durch dieselbe versorgten Funktionen und Geräte sind abgeschaltet. Gleichzeitig wird das Zeitglied 14 durch die CPU 15 so programmiert, daß es nach einer entsprechenden Zeitdauer ein internes Signal abgibt, durch welches der Spannungsschalter 12 wieder geschlossen wird. Der laufende Betrieb des Switches 3 ist dann wieder hergestellt.

Während der beschriebenen Abschaltung des Switches 3 ist die Standby-Schaltung 13 weiter an die Spannung P1 angeschlossen, so daß sie funktionsfähig bleibt und durch das interne Signal des Zeitgliedes 14 deaktiviert werden kann. Auch eine elektronische Schaltung 16 für den Netzwerkanschluss 7 bleibt im dargestellten Ausführungsbeispiel weiter an die Spannung P1 angeschlossen, so daß die bereits erwähnte Link-Unterbrechung erkannt werden kann.

Der Netzwerkanschluß 7 ist typischerweise über ein Kupfer- oder Glasfaserkabel mit dem zentralen Switch 1 des Netzwerkes verbunden, der typischerweise ständig in Betriebsbereitschaft ist. Dadurch, daß die Geräteanschlüsse auf beiden Seiten der Verbindung ständig mit Spannung versorgt sind, wird auf beiden Seiten der Kupfer- bzw. Glasfaserverbindung ein aktiver Link erkannt. Dieser Link-Zustand wird als elektrisches Signal, das den Zustand aktiv bzw. inaktiv annehmen kann, der Standby-Schaltung 13 zugeführt. Falls sich dieser Link-Zustand von aktiv auf inaktiv oder umgekehrt ändert, erkennt dies die Standby-Schaltung 13 und deaktiviert den Standby-Betrieb. Diese Änderung des Link-Zustandes wird typischerweise durch den zentralen Switch 1 ausgelöst, indem er seinen betreffenden Geräteanschluß deaktiviert und wieder aktiviert.

## Patentansprüche

1. Verfahren zum Betreiben eines digitalen Netzwerks, das mindestens einen Verteiler aufweist, an welchen eine beliebige Anzahl elektronischer Geräte und zumindest eine Spannungsquelle angeschlossen sind, **dadurch gekennzeichnet,**
- **daß** in dem Verteiler (3) zusätzlich eine ständig mit der Spannungsquelle verbundene Bereitschaftsschaltung (13) mit einem Spannungsschalter (12) angeschlossen wird, durch welchen signifikante Teile der Spannungsversorgung (P2) des Verteilers (3) zu dessen Aktivierung einerseits und Deaktivierung andererseits aus der Spannungsquelle ein- und ausschaltbar sind, und
- **daß** die im aktiven Zustand befindliche Bereitschaftsschaltung (13) durch ein internes Signal oder durch ein externes Signal manuell oder zu einem vorgebbaren Zeitpunkt deaktiviert wird.

2. Verfahren nach Anspruch 1, **dadurch gekennzeichnet, daß** in dem Switch (3) ein Zeitglied (14) angeordnet wird, durch welches die Bereitschaftsschaltung (13) nach einer vorgegebenen Zeitdauer deaktiviert wird.

3. Verfahren nach Anspruch 2, **dadurch gekennzeichnet, daß** das Zeitglied (14) durch interne Signale des Verteilers (3) oder durch externe Signale eingestellt wird.

4. Verfahren nach Anspruch 2, **dadurch gekennzeichnet, daß** das Zeitglied (14) durch einen zentralen Prozessor (15) des Verteilers (3) mit gleichzeitiger Aktivierung der Bereitschaftsschaltung (13) eingestellt wird.

5. Verfahren nach Anspruch 4, **dadurch gekennzeichnet, daß** die Bereitschaftsschaltung (13) nach Ablauf einer am Zeitglied (14) eingestellten Zeitdauer durch dasselbe deaktiviert wird.

6. Verfahren nach Anspruch 3, **dadurch gekennzeichnet, daß** die Bereitschaftsschaltung (13) durch eine Link-Unterbrechung eines spannungsversorgten Geräteanschlusses (7) des Verteilers (3) deaktiviert wird.

7. Verteiler für ein Verfahren nach den Ansprüchen 1 bis 6, **dadurch gekennzeichnet, daß** dem Verteiler eine Bereitschaftsschaltung (13) mit einem Spannungsschalter (12) zugeordnet ist, die durch ein internes Signal oder ein externes Signal aktivierbar bzw. deaktivierbar ist.
